# EUROPEAN PATENT APPLICATION

(11) **EP 1 176 815 A2**
(43) Date of publication of application: **30.01.2002**
(21) Application number: 01106360.9
(22) Date of filing: 16.03.2001
(51) Int. Cl.: H04N 5/44

(54) **Device control system and apparatus, and device control method on network**

(30) Priority: 26.07.2000 JP 2000225741
(71) Applicant: KABUSHIKI KAISHA TOSHIBA, Kawasaki-shi (JP)
(72) Inventor: Konda, Kazunobu, Kabushiki Kaisha Toshiba, Minato-ku, Tokyo 105-8001 (JP); Tajima, Teruo, Kabushiki Kaisha Toshiba, Minato-ku, Tokyo 105-8001 (JP); Matsushita, Ken, Kabushiki Kaisha Toshiba, Minato-ku, Tokyo 105-8001 (JP)
(74) Representative: HOFFMANN - EITLE

(57) **Abstract**

A self-device on a network is designed not to be unintentionally operated from a remote device. For this purpose, in a network including a self-device (10) for performing processing corresponding to a received AV/C command and one or more remote devices (20, 30) for sending out AV/C commands (excluding commands containing only statuses), the self-device (10) has mode 1 of giving a high priority to control on itself and mode 2 of accepting control from remote devices (20, 30) as well. Mode 1 or mode 2 is set by a user. In mode 1 (NO in ST16), the self-device (10) rejects AV/C commands supplied from the remote devices (20, 30) (ST22).

## Description

The present invention relates to a device control system, device control apparatus, and device control method on a network, which use IEEE 1394 and the like.

Among devices networked to each other by using an IEEE 1394 serial bus, a given device can control a remote device by transmitting an AV/C control command to the remote device. Upon reception of the AV/C control command, the device executes a function corresponding to the command. In this case, a control target device (self-device) accepts both control for the reception of remote control operation or the like from a user and control executed by the remote device through IEEE 1394. In this case, the IEEE 1394 interface (the LSI incorporating this interface function) in the self-device is kept on to accept a control command from the remote device.

As a conventional example of a network system having such an IEEE 1394 interface, for example, the media content management AV system disclosed in Jpn. Pat. Appln. KOKAI Publication No. 9-120666 or the AV system having a plurality of video devices, disclosed in Jpn. Pat. Appln. KOKAI Publication No. 9-130688 is available.

When the user is using the control target device (self-device) on the network, the state of the control target device (self-device) used by the user may be changed by a control command from a remote device. For example, while the user is watching and listening to a program over a given broadcast channel through a digital TV (self-device), the current channel may be abruptly switched to another channel by a station switching command from a remote device on the network. In such a case, the user feels uncomfortable or a sense of incongruity in operating the digital TV (self-device).

In addition, to allow a given device incorporating an IEEE 1394 serial bus on a network to receive an AV/C command from a remote device, the IEEE 1394 interface LSI must always be in the ON state, and the power supply of the LSI cannot be completely turned off.

The present invention has been made in consideration of the above situation, and has as its object to provide a device control system, device control apparatus, and device control method which can prevent a self-device on a network from being unintentionally operated by a command from a remote device.

It is another object of the present invention to provide a device control system, device control apparatus, and device control method which can turn off the power supply of the interface device (IEEE 1394 interface LSI or the like) of a self-device (or switching the interface device to the inactive state or power save mode) when the power supply of the self-device is turned off while the self-device accepts no control from remote devices.

In order to achieve the above objects, in a device control system, device control apparatus, or device control method according to the present invention, a self-device incorporating an IEEE 1394 interface, to which a remote device is connected through, for example, an IEEE 1394 serial bus, is configured to set a method of using the IEEE 1394 serial bus (whether to permit or inhibit control from remote devices).

The processing of setting the method of using the IEEE 1394 serial bus includes the first user setting (mode 1) of giving a higher priority to operation of the self-device than to operation from the remote devices and the second user setting (mode 2) of accepting operation from the remote devices as well. The user of the self-device can determine whether to set the first or second user setting.

In the first user setting (mode 1), the self-device can be configured to return rejected responses to all operation commands from the remote devices.

In the first user setting (mode 1), the self-device can turn off the power supply of the remote device and also turn off the power supply of the IEEE 1394 interface or switch it to the inactive state (or power save mode).

According to the system, apparatus, or method configured in the above manner, by letting the user set the function of the self-device using the IEEE 1394 serial bus (determine whether to receive AV/C control commands from remote devices), interference from the remote devices can be prevented, and user's feeling in using the self-device can be improved. In addition, when the power supply of the self-device is to be turned off, the power supply of the IEEE 1394 interface of the self-device can also be turned off. This makes it possible to save the power that would be consumed by the IEEE 1394 LSI.

This summary of the invention does not necessarily describe all necessary features so that the invention may also be a sub-combination of these described features.

The invention can be more fully under stood from the following detailed description when taken in conjunction with the accompanying drawings, in which:
FIG. 1 is a block diagram showing an example of the system configuration of a network control system according to an embodiment of the present invention;
FIG. 2 is a flow chart for explaining an example of the operation of a self-device in a case wherein an AV/C control command is received from a remote device in the system according to the embodiment of the present invention;
FIG. 3 is a flow chart for explaining an example of the operation to be performed when an instruction to turn off the power supply is given by an AV/C control command or the like in the system according to the embodiment of the present invention;
FIG. 4 is a flow chart for explaining an example of how the self-device performs only processing corresponding to an AV/C control command from a registered remote device in the system according to the embodiment of the present invention; and
FIG. 5 is a flow chart for explaining another example of how the self-device performs only processing corresponding to an AV/C control command from a registered remote device in the system according to the embodiment of the present invention.

A device control system according to an embodiment of the present invention will be described below with reference to the views of the accompanying drawing.

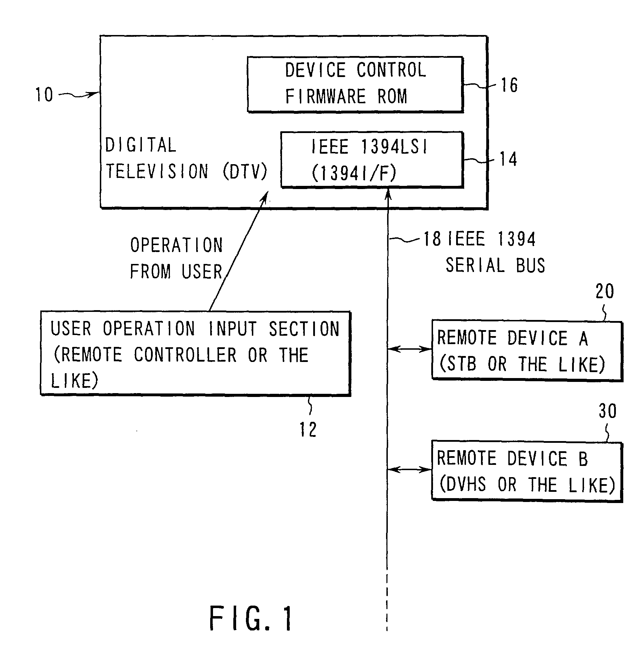

FIG. 1 is a block diagram for explaining an example of the system configuration of a network control system according to the embodiment of the present invention. In this system configuration, digital television (DTV) 10 incorporating TV broadcast tuner or tuner-less monitor display 10 having a digital input terminal can be used as a self-device. Assume that in this case, DTV 10 with a built-in tuner is a self-device that can be controlled by an AV/C command. A specific example of the AV/C command will be described later.

User operation (power on/off, reception channel designation or station switching, intra-device connection switching or external AV input terminal switching/selection, volume/tone setting, image quality/aspect ratio setting, or the like) for DTV (self-device) 10 can be executed through user operation input section 12 such as the operation panel (not shown) on the main body of DTV 10 or a remote controller. In this case, user operation is performed through remote controller 12.

Operation (power on/off, reception channel designation or station switching, or the like) for DTV (self-device) 10 can also be executed by an AV/C command. Assume that the user turns on DTV (self-device) 10 and selects desired TV channel 1 through remote controller 12. In this case, while the user watching and listening to a program over the selected channel, the channel to be watched/listened to on DTV 10 can be switched from channel 1 to channel 3 by an AV/C control command (tuning command) from a remote device (to be described later).

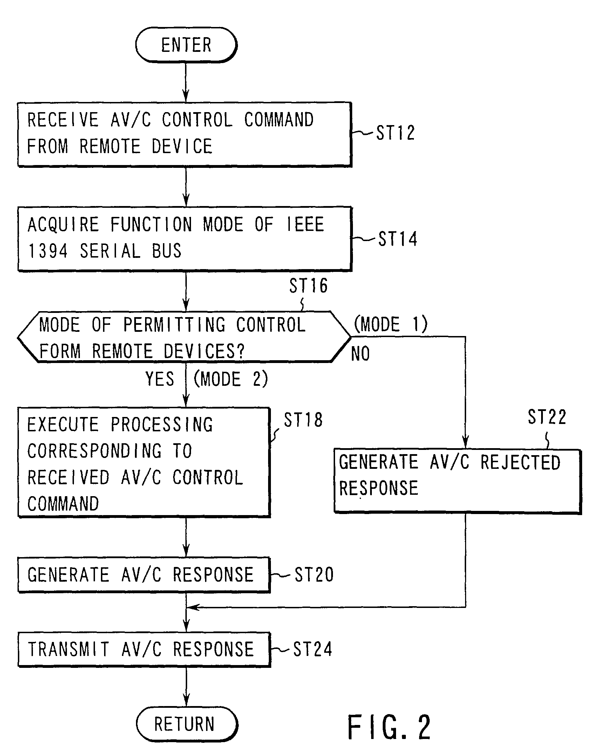

DTV 10 incorporates IEEE 1394 LSI (IEEE 1394 I/F) 14 and ROM 16 in which firmware (corresponding to the processing in FIGS. 2 to 5 to be described later) for various device control operations is written. This firmware is executed by a microcomputer (MPU) (not shown) incorporated in DTV 10 and/or IEEE 1394 LSI 14.

A plurality of IEEE 1394 devices 20 (remote device A having an IEEE 1394 I/F) and 30 (remote device B having an IEEE 1394 I/F) are connected to IEEE 1394 LSI 14 of DTV 10 through IEEE 1394 serial bus 18.

As remote device A, for example, set-top box (STB) 20 including a digital TV broadcast tuner and a switcher for switching/selecting a plurality of AV signals can be used. As remote device B, for example, a streamer (e.g., a DVHS or DVD streamer) capable of directly recording/playing back digital broadcast stream data (MPEG 2 transport stream) can be used.

Other devices (not shown) having IEEE 1394 I/Fs and complying with AV/C commands can be connected to IEEE 1394 serial bus 18, as needed.

In the system configuration in FIG. 1, DTV (self-device) 10 has the function of setting a method of using IEEE 1394 serial bus 18 (designating whether to allow or reject control based on AV/C commands from remote devices 20 and 30 and the like).

More specifically, DTV (self-device) 10 has the first mode (mode 1) of making control on itself a higher priority (than control from remote devices) and the second mode (mode 2) of accepting control from remote controls 20 and 30 as well. In the second mode (mode 2), DTV (self-device) 10 performs processing corresponding to a supplied AV/C command. In the first mode (mode 1), DTV (self-device) 10 can be configured to reject AV/C commands supplied from remote devices 20 and 30.

The above arrangement can prevent the occurrence of an event that makes the user feel uncomfortable. For example, this can prevent the TV channel, the program of which is currently watched/listened to by the user on DTV 10 set in the first mode (mode 1), from being abruptly switched to an unwanted channel in accordance with a tuning command from a remote device.

The user can decide to use the first mode (mode 1) or the second mode (mode 2). For example, DTV 10 can be configured to display a mode selection menu (not shown) on the screen to allow the user to select a desired mode (mode 1 or mode 2) by key-operating remote controller 12

DTV (self-device) 10 can also be configured to return command rejected responses to remote devices 20 and 30 when DTV 10 rejects AV/C commands from remote devices 20 and 30.

In addition, DTV (self-device) 10 can be configured to turn off the power supply of IEEE 1394 LSI (IEEE 1394 I/F) 14 or switch it to the inactive state when the power supply of self-device 10 is turned off in the first mode (mode 1) of giving a high control priority on itself.

The above arrangement allows DTV 10 in the first mode (mode 1) of making control on itself a higher priority than control from a remote device to turn off the power supply of IEEE 1394 LSI 14 when the power supply of the remove device is turned off (this is because DTV 10 in the first mode receives no AV/C command from a remote device, and IEEE 1394 LSI 14 need not be in the active state). This can save the power that would be consumed by IEEE 1394 LSI 14 in DTV 10 when the power supply of DTV 10 is turned off and waits for a power-on command or the like from remote controller 12.

The use of IEEE 1394 interface (IEEE 1394 LSI) 14 allows each of devices networked to each other to check which type of device is the remote device.

For example, each device (e.g., DTV (self-device) 10) can know the contents of a remote device (e.g., STB 20) from the following information through IEEE 1394 serial bus 18:
* The ID of STB 10 is XXX ··· XXX, the vendor name is T, and the model name is "model name ABC; and
* It has a tuner sub-unit.

Likewise, a remote device (e.g., STB 20) can know that the self-device (DTV 10) has the following contents:
* The ID of the digital TV is YYY ··· YYY, the vendor name is M, and the model name is "model name XYZ"; and
* It has a tuner sub-unit and monitor sub-unit.

Upon acquiring the above information, STB 20 can exchange data with DTV 10 by isochronous transfer (or asynchronous transfer) using a predetermined channel number on the basis of IEEE 1394.

According to IEEE 1394, the following items are determined before normal packet transfer is performed after reset operation:
(1) the identifications of nodes (parentage between nodes) connected to the IEEE 1394 bus;
(2) a root node (DTV 10 in FIG. 1);
(3) self-identifications (the node IDS of the DTV and STB in FIG. 1);
(4) an isochronous resource manager;
(5) a cycle master; and
(6) bus manager

When the nodes (DTV and STB) connected to the IEEE 1394 bus are determined, normal packet transfer (isochronous or asynchronous transfer) is started.

In this case, isochronous transfer is a transfer scheme of transmitting/receiving data in a predetermined cycle (125 µs). The format of a packet in isochronous transfer includes a channel number instead of a destination ID. Asynchronous transfer is a transfer scheme of transmitting/receiving data at arbitrary time. An AV/C command can be transferred by using asynchronous transfer, whereas AV data (e.g., an MPEG 2 transport stream) can be transferred by using isochronous transfer.

The IEEE 1394 communication controller (IEEE 1394 LSI 14) incorporated in each device has hardware and software (firmware) required for IEEE 1394 processing (e.g., determination of the above items).

The following are examples of AV/C commands that can be used in this embodiment of the present invention (excluding commands containing only status commands).

General "unit commands" include "CONNECT" for plug connection, "DIGITAL INPUT" for input setting of digital broadcasting or the like, "DIGITAL OUTPUT" for output setting of digital broadcasting or the like, "DISCONNECT" for plug disconnection, "INPUT PLUG SIGNAL FORMAT" for setting/inquiry of an input plug signal format, "OUTPUT PLUG SIGNAL FORMAT" for setting/inquiry of an output plug signal format.

General "common unit and sub-unit commands" include "OPEN DESCRIPTOR" for acquisition of an access right to a descriptor (an information table serving as an information exchange unit), "READ DESCRIPTOR" for reading information from a descriptor, "WRITE DESCRIPTOR" for writing information in a descriptor, "SEARCH DESCRIPTOR" for searching a descriptor for an arbitrary pattern, "OBJECT NUMBER SELECT" for selecting an object by using an object ID and list ID, "POWER" for managing the power supply state, "RESERVE" for exclusive control, "VENDOR-DEPENDENT" for a vendor-dependent command for each device, and the like.

"Tuner sub-unit" commands include "DIRECT SELECT INFORMATION TYPE" for tuning, "DIRECT SELECT DATA" for acquiring data, "CA ENABLE" for descrambling a CA broadcast (restricted broadcast), "TUNER STATUS" for notifying a change in tuner status, and the like.

"VCR sub-unit" commands include "ANALOG AUDIO OUTPUT MODE" for setting/inquiry of analog sounds (left audio/right audio, main audio/second audio), "AREA MODE" for designating a recording area on a tape (recording medium), "ABSOLUTE TRACK NUMBER" for checking/searching for a tape position (for a digital VCR), "AUDIO MODE" for designating a recording mode for an audio signal, "BACKWARD" for moving the tape position backward by a designated amount, "BINARY GROUP" (for the digital VCR) for reading/writing private data, "EDIT MODE" for performing synchronous playback/recording, "FORWARD" for moving the tape position forward by a designated amount, "INPUT SIGNAL MODE" for setting/inquiry of an input signal, "LOAD MEDIUM" for loading/unloading a tape (recording medium), "MARKER" for recording/erasing a maker (for recorded contents), "MEDIUM INFO" for acquiring information associated with a tape (recording medium), "OPEN MIC" for opening/closing the MIC (the memory in the cassette), "OUTPUT SIGNAL MODE" for setting/inquiry of an output signal, "PLAY" for playback, "PRESET" for setting/checking of a preset value, "READ MIC" for reading information from the MIC, "RECORD" for performing picture recording (recording), "RECORDING DATE" for checking a picture recording (recording) date, "RECORDING SPEED" for controlling the recording speed (speeds corresponding to recording modes, e.g., EP/SP/LP, with different recording times), "RECORDING TIME" for checking a picture recording (recording) time, "RELATIVE TIME COUNTER" for acquisition/ initialization of a relative time count (RTC) value and a search with the RTC, "SEARCH MODE" for checking a search mode/search direction, "SMPTE/EBU RECORDING TIME" for checking a recording time (time code), "TAPE PLAYBACK FORMAT" for setting a digital playback format, "TAPE RECORDING FORMAT" for setting a digital recording format, "TIME CODE" for a current position check/ designated position search, "TRANSPORT STATE" for checking the state of a tape transport mechanism, "WIND" for fast forward/pause/fast-reverse (rewind), "WRITE MIC" for writing information in the MIC, and the like.

In this case, "PLAY", "RECORD", and "WIND" that can be used for device control and "INPUT SIGNAL MODE", "OUTPUT SIGNAL MODE", "TAPE PLAYBACK FORMAT", "TAPE RECORDING FORMAT", and "TRANSPORT STATE" that can be used for inquiries about statuses are essential commands for devices compatible with VCR sub-unit commands.

FIG. 2 is a flow chart for explaining an example of the operation of a self-device in the system according to this embodiment of the present invention in a case wherein a AV/C control command is received from a remote device.

A self-device (DTV 10) has a function of allowing reception of a predetermined control command (AV/C control command) and performing processing corresponding to the received control command. In addition, the self-device (DTV 10) has the first mode (mode 1) of giving a high priority to control on itself (10) and the second mode (mode 2) of also accepting control from remote devices (20, 30) described above.

The remote devices (STB 20, DVHS 30, and the like) are connected to the self-device (10), and each remote device sends out at least one AV/C control command (excluding commands containing only statuses). In the network (FIG. 1) in which such devices (10, 20, 30) are connected to each other through IEEE 1394 serial bus 18, the processing in the flow chart of FIG. 2 is executed.

The processing in this flow chart is written as firmware in ROM 16 in the self-device (DTV 10) and can be executed by a microcomputer (MPU) (not shown) in the self-device (DTV 10) and/or IEEE 1394 LSI.

First of all, the self-device (DTV 10) receives an AV/C control command from a remote device (STB 20, DVHS 30, or the like) (step ST12).

As the AV/C control command used in step ST12, one of all control commands except for commands containing only status commands can be used. In this embodiment, the internal connections of the self-device (DTV 10) are switched by the "CONNECT" control command/"DISCONNECT" control command, and tuning is performed by the "DIRECT SELECT INFORMATION TYPE" control command.

The self-device (DTV 10) acquires the function mode (mode 1 or mode 2 set by the user) of IEEE 1394 serial bus 18 (step ST14). The self-device then checks whether the acquired mode is the mode of permitting control from the remote device (20, 30) (step ST16).

In mode 1 (NO in step ST16) of inhibiting control from the remote device, a higher priority is given to control on the self-device than to the remote device. That is, in mode 1, an AV/C control command from the self-device is higher in priority than an AV/C control command from the remote device. In other words, in mode 1, the self-device operates in accordance with an AV/C control command from itself but rejects an AV/C control command from the remote device.

In mode 2 (YES in step ST16), the self-device (DTV 10) can perform not only processing corresponding to an AV/C control command from itself but also processing corresponding to an AV/C control command from the remote device (STB 20, DVHS 30, or the like) (step ST18).

When the processing corresponding to the AV/C command is performed in mode 2 (step ST18), the self-device generates an AV/C response to respond to the processing (step ST20).

In mode 1 (NO in step ST16), the self-device (DTV 10) rejects the control command (AV/C control command) supplied from the remote device (20, 30), and generates an AV/C rejected response (step ST22). More specifically, when the user is using DTV 10 and mode 1 is set, switching of the internal connections of DTV 10, changing of the received program, and the like are all rejected, and no AV/C control command from the remote device is received. In this case, an AV/C rejected response is generated (step ST22).

This prevents the program currently watched by the user from being abruptly changed to another program or the input source from being abruptly switched from the internal tuner to the IEEE 1394 serial bus by a command from a remote device while the user is using the self-device (DTV 10), thereby improving user-friendliness (operability).

If an AV/C rejected response is generated in step ST22, this response is transmitted (returned) from the self-device to the remote device through IEEE 1394 serial bus 18 (step ST24). If an AV/C response is generated in step ST20, this response is transmitted (returned) from the self-device to the remote device through IEEE 1394 serial bus 18 (step ST24).

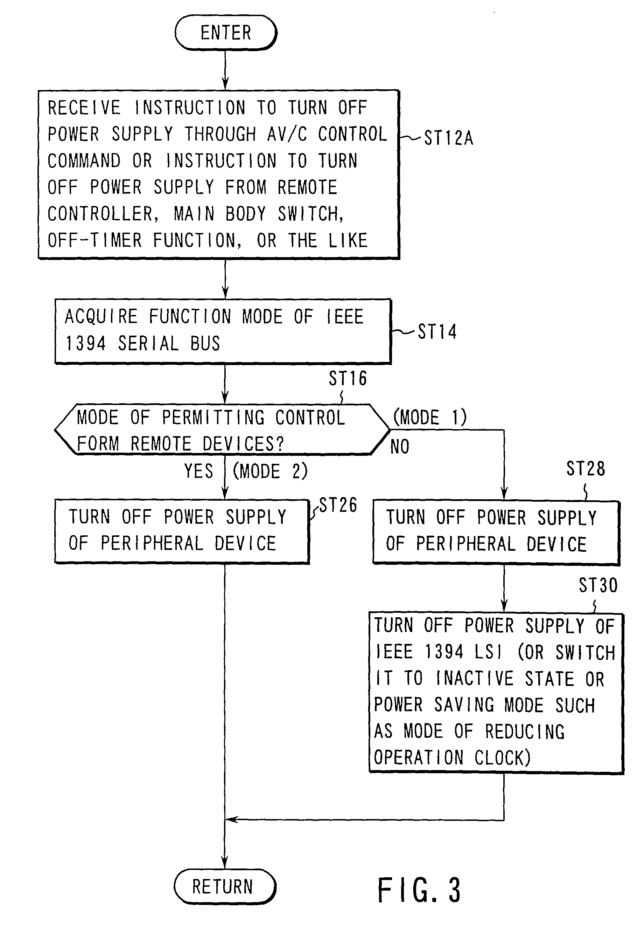

FIG. 3 is a flow chart for explaining an example of the operation to be performed when an instruction to turn off the power supply is given by an AV/C power control command or the like in the system according to the embodiment of the present invention.

The processing in this flow chart is written as firmware in ROM 16 in DTV 10 in FIG. 1 and executed by the microcomputer (MPU) (not shown) in DTV 10 (or the IEEE 1394 LSI).

First of all, the self-device (DTV 10) receives an instruction to turn off the power supply through a switch on the self-device main body, remote controller 12, an off-timer function (not shown), or an AV/C control command ("POWER" command) from a remote device (step ST12A).

The self-device (DTV 10) acquires the function mode (mode 1 or mode 2 set by the user) of IEEE 1394 serial bus 18 (step ST14). The self-device checks whether the acquired mode is the mode of permitting control from remote devices (20, 30) (step ST16).

If the determination result in step ST16 indicates mode 2 (YES in step ST16), the self-device (DTV 10) turns off the power supply of a peripheral device (e.g., an internal device (not shown) of the self-device) (step ST26). In this case, the power supply of the IEEE 1394 interface is not turned off.

If the determination result in step ST16 indicates mode 1 of inhibiting control from remote devices (giving a high priority to control on the self-device) (NO in step ST16), the self-device (DTV 10) turns off the power supply of a peripheral device of the remote device (step ST28), and also can turn off the power supply of IEEE 1394 LSI 14 of the self-device or switch the current state to the inactive state or power save mode (step ST30).

Assume that the power supply of the self-device is to be turned off. In this case, in mode 1, since the self-device need not accept control from remote devices, the power supply of the IEEE 1394 interface (IEEE 1394 LSI 14) of the self-device can also be turned off (or switched to the power save mode). Even if the power supply of the self-device is turned off, the self-device is set in the standby mode in which it can receive a power-on command from the remote controller. For this reason, while the self-device is in the active state or the standby state in which it waits for a power-on command or the like from remote controller 12, the power that would be consumed by IEEE 1394 LSI 14 can be saved.

If the power supply of the self-device (DTV 10) is turned on by the operation of remote controller 12, the power supply of IEEE 1394 LSI 14 of the self-device is also turned on.

According to the processing in FIG. 3, in mode 1, since the self-device accepts no control from remote devices, when the power supply of the self-device (DTV 10) is turned off in accordance with an instruction from the user (or only the self-device is used in mode 1), the power supply of the IEEE 1394 LSI can also turned off at once. This can realize power saving.

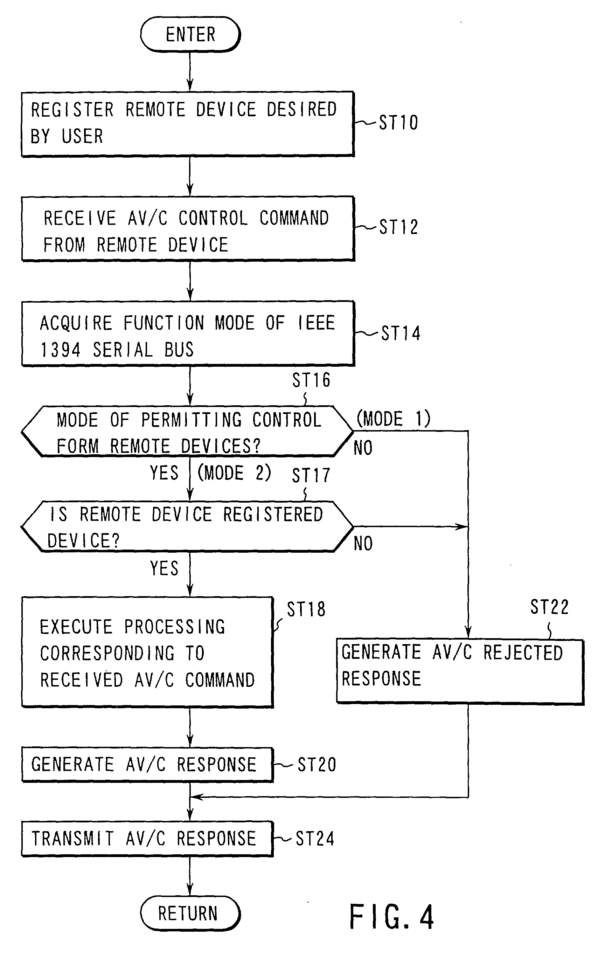

FIG. 4 is a flow chart for explaining an example of how the self-device performs only processing corresponding to an AV/C control command from a registered remote device in the system according to the embodiment of the present invention.

The processing in this flow chart is written as firmware in ROM 16 in DTV 10 in FIG. 1 and executed by the microcomputer (MPU) (not shown) in DTV 10 (or IEEE 1394 LSI).

First of all, a predetermined remote device (e.g., 30) of one or more remote devices (20, 30) networked to each other through IEEE 1394 serial bus 18 is registered (step ST10).

This device registration is performed as follows. All the devices connected to IEEE 1394 serial bus 18 are displayed on a menu on the screen of the self-device (DTV 10) (not shown). When the user selects and confirms a desired device, of the devices displayed on the menu, by operating remote controller 12, the selected device is registered in the internal memory (not shown) of the self-device (DTV 10). With this user operation in step ST10, for example, the device B (DVHS) 30 in FIG. 1 is registered, and device A (STB) 20 can be removed from the list.

The self-device (DTV 10) receives an AV/C control command from a remote device (STB 20, DVHS 30, or the like) (step ST12).

Subsequently, the self-device (DTV 10) acquires the function mode (mode 1 or mode 2 set by the user) of IEEE 1394 serial bus 18 (step ST14). The self-device checks whether the acquired mode is the mode of permitting control from remote devices (step ST16).

If the acquired mode is mode 1 of inhibiting control from remote devices (NO in step ST16), a higher priority is given to control on the self-device than to control from remote devices. That is, in mode 1, the self-device operates in accordance with an AV/C control command from itself, but any AV/C control commands from remote devices are rejected. In this case, the self-device (DTV 10) generates a rejected response (step ST22).

In mode 2 (YES in step ST16), if the AV/C control command received in step ST12 is not a command from a predetermined remote device (e.g., 30) registered in step ST10 (NO in step ST17), the self-device (DTV 10) also rejects the AV/C control command supplied from the remote device (20) and generates a rejected response (step ST22).

This prevents the program currently watched by the user from being abruptly changed to another program or the input source from being abruptly switched from the internal tuner to the IEEE 1394 serial bus by a command from a remote device while the user is using the self-device (DTV 10), thereby improving user-friendliness (operability).

If mode 2 (YES in step ST16) is set, and the received AV/C control command is supplied from a predetermined registered remote device (30) (YES in step ST17), the self-device (DTV 10) performs processing corresponding to the supplied AV/C control command (step ST18). When the processing corresponding to the correlation value is performed in mode 2 (step ST18), the self-device generates an AV/C rejected response to respond to the processing (step ST20).

If an AV/C rejected response is generated in step ST22, this rejected response is transmitted (returned) from the self-device to the remote device through IEEE 1394 serial bus 18 (step ST24). If an AV/C response is generated in step ST20, this response is transmitted (returned) from the self-device to the remote device through IEEE 1394 serial bus 18 (step ST24).

According to the characteristic feature of the processing in FIG. 4, even if the user sets mode 2 of permitting control from remote devices, the self-device does not receive any control command from a remote device unless the remote device is specially registered by the user.

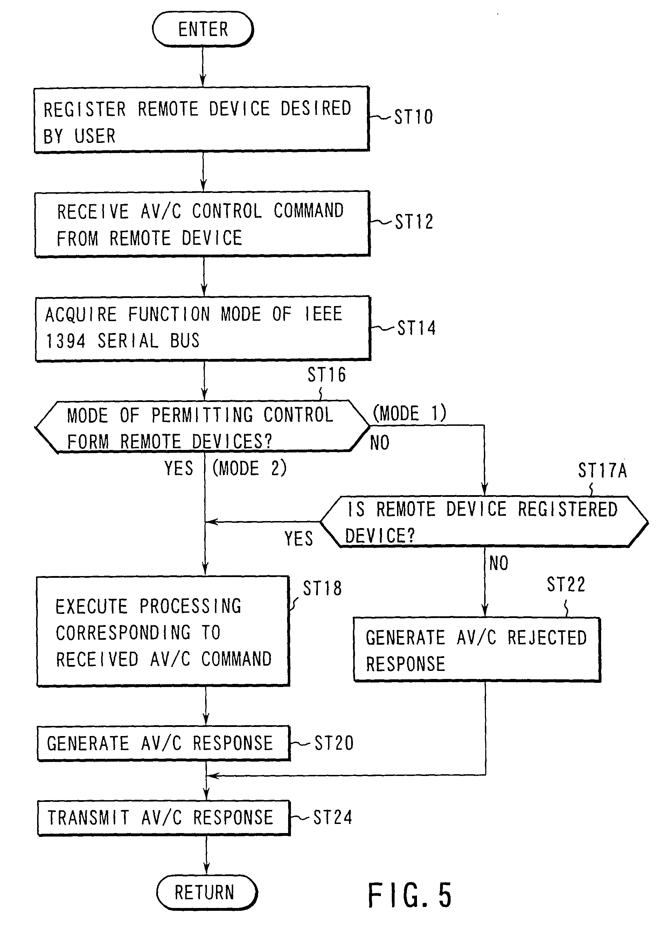

FIG. 5 is a flow chart for explaining another example of how the self-device performs only processing corresponding to an AV/C control command from a registered remote device in the system according to the embodiment of the present invention. The processing in FIG. 5 differs from that in FIG. 4 in the portions corresponding to steps ST16 and ST17 (ST17A). These different portions will be described below.

In mode 1 (NO in step ST16), the self-device (DTV 10) rejects an AV/C control command supplied from a remote device (20) unless the AV/C control command is supplied from a predetermined registered remote device (30) (NO in step ST17A), and generates a rejected response (step ST22).

In mode 1 (NO in step ST16), if the AV/C control command is a command from a predetermined registered remote device (30) (YES in step ST17A), the self-device (DTV 10) performs processing corresponding to the AV/C control command supplied from the remote device (30) (step ST1), as in mode 2 (YES in step ST16).

According to the characteristic feature of the processing in FIG. 5, even if the user sets mode 1 of inhibiting control from remote devices, the self-device receives a control command from a remote device when the remote device has been specially registered by the user.

In the system in FIG. 1, as devices networked to each other through IEEE 1394 serial bus 18, any AV devices serving as controllers (having the function of controlling remote devices) can be used.

If, for example, the self-device connected networked to the above remote devices is a recording device (DVHS, DVD streamer, or the like), it can control remote devices (tuners incorporated in a DTV, STB, and the like) by using AV/C control commands. When the user is to record (picture-record) an output from such a remote device (e.g., a STB tuner) by using the self-device, he/she can set the self-device (e.g., a DVHS) such that it rejects any AV/C control command ("PLAY" command or the like) from another remote device (e.g., a DTV) (NO in step ST16 in FIG. 2). With this setting, when the self-device (DVHS) records a signal from a remote device (STB tuner), the recording mode of the self-device (DVHS) is not changed to the playback mode by the "PLAY" command from another remote device (DTV).

The mode determination in step ST16 in FIGS. 2 to 5 can also be executed by storing, in advance, information indicating that a specific control command from a remote device is a command corresponding to mode 1 regardless of the type of remote device.

The present invention is not limited to the embodiment described above, and various changes and modifications can be made within the spirit and scope of the invention. In addition, wherever feasible, the respective embodiments can be practiced in combination with each other. In this case, some effects can be obtained from the combination.

The above embodiment includes various phases of the present invention, and various inventions can be extracted from proper combinations of a plurality of constituent elements disclosed in the present application. Even if, for example, one or a plurality of constituent elements are removed from all the constituent elements in the embodiment, the arrangement from which these constituent elements are removed can be extracted as an invention as long as the effect of the present invention can be obtained.

### <Summary of Embodiment>

1. A device incorporating an IEEE 1394 serial bus has the function of setting the method of using the IEEE 1394 serial bus.
2. With regard to the method of using the IEEE 1394 serial bus, the self-device has the function of allowing the user to explicitly set the mode of giving a high priority to the operation of the self-device and the mode of accepting operations from remote devices as well.
3. In the mode of giving a high priority to the operation of the self-device, the self-device has the function of returning rejected responses to all AV/C commands.
   This allows the user to set the mode of giving a high priority to the operation of the self-device, thereby rejecting all AV/C control commands from remote devices.
4. In the mode of giving a high priority to the operation of the self-device, the self-device has the function of turning off the power supply of the IEEE 1394 LSI when the power supply of the self-device is to be turned off.

This allows the self-device to turn off the power supply of the IEEE 1394 LSI as well when the power supply of the self-device is to be turned off in the mode of giving a high priority to the operation of the self-device.

As has been described above, the device control apparatus, device control method, or device control system according to the present invention prevents the self-device from being operated from a remote device against user's intention while he/she is using the self-device.

In addition, when the power supply of the self-device is to be turned off, the power supply of the IEEE 1394 interface (IEEE 1394 LSI 14) of the self-device can also be turned off (or switched to the power saving mode). (Even if the power supply of the self-device is turned off, the self-device is set in the standby state in which it can receive a power-on command from the remote controller). For this reason, while the self-device is in the active state or the standby state in which it waits for a power-on command, the power that would be consumed by the IEEE 1394 interface (IEEE 1394 LSI 14) can be saved.

## Claims

1. A device control apparatus serving as a self-device (10) incorporating an interface (14) to which a remote device (20, 30) can be connected through a bus (18), **characterized by** comprising a function (ST16) of setting a method of using the bus (18).

2. An apparatus according to claim 1, **characterized in that** the bus (18) comprises an IEEE 1394 serial bus (18), and the interface (14) comprises an IEEE 1394 interface (14).

3. An apparatus according to claim 2, **characterized in that** the method of using the bus comprises indicating whether to permit or inhibit control from the remote device (20, 30).

4. An apparatus according to claim 2 or 3, **characterized in that** said function (ST16) of setting the method of using the IEEE 1394 serial bus (18) comprises a first user setting (mode 1: NO in ST16) of giving a high priority to operation of said self-device (10) and a second user setting (mode 2; YES in ST16) of accepting operation from the remote device (20, 30) as well.

5. An apparatus according to claim 4, **characterized in that** in the first user setting (mode 1), said self-device (10) returns rejected responses to all operation commands from the remote device (20, 30) (ST22, ST24).

6. An apparatus according to claim 4 or 5, **characterized in that** in the first user setting (mode 1), said self-device (10) can turn off a power supply of an internal device of said self-device (ST28) and also turn off a power supply of the IEEE 1394 interface (14) or switch the IEEE 1394 interface to an inactive state (ST30).

7. An apparatus according to any one of claims 2 to 6, **characterized in that**
said apparatus serves as a digital video apparatus (DTV 10) incorporating an IEEE 1394 interface (14) to which a remote digital device (STB 20, DVHS 30) can be connected through IEEE 1394 serial bus (18), and
comprises a function (ST16) of setting whether to permit or inhibit control from the remote digital device (20, 30) as the method of using the IEEE 1394 serial bus (14).

8. An apparatus according to claim 7, **characterized in that**
said function (ST16) is written as predetermined device control firmware (FIGS. 2 - 5) in a memory (ROM 16), and
the memory (16), the IEEE 1394 interface (14), and a video display apparatus (10) constitute a digital television apparatus.

9. A device control method used in a self-device (10) incorporating an interface (14) to which a remote device (20, 30) can be connected through a bus (18), **characterized by** comprising providing a function (ST16) of setting a method of using the bus (18).

10. A method according to claim 9, which can be used in a network (FIG. 1) including a self-device (10) having a function of receiving a predetermined control command (AV/C control command) and performing processing corresponding to the received control command, and having a first mode (mode 1) of giving a high priority to control on the self-device (10) and a second mode (mode 2) of accepting control from a remote device (20, 30), and at least one remote device (20, 30) which is connected to the self-device (10) and sends out at least one control command (excluding a command containing only a status), **characterized by** comprising:
in the first mode (mode 1) (NO in ST16), causing the self-device (10) to reject a control command (AV/C control command) supplied from the remote device (20, 30) (ST22); and
in the second mode (mode 2) (YES in ST16), causing the self-device (10) to perform processing corresponding to a control command (AV/C control command) supplied to the self-device (10).

11. A method according to claim 9, which can be used in a network (FIG. 1) including a self-device (10) having an IEEE 1394 interface (14) for receiving a predetermined control command (AV/C control command) and performing processing corresponding to the received control command, and having a first mode (mode 1) of giving a high priority to control on the self-device (10) and a second mode (mode 2) of accepting control from a remote device (20, 30), and at least one remote device (20, 30) which is connected to the self-device (10) and sends out at least one control command (excluding a command containing only a status), **characterized by** comprising:
in the first mode (mode 1) (NO in ST16), causing the self-device (10) to turn off a power supply of the remote device (20, 30) (ST28) and also turn off a power supply of the IEEE 1394 interface (14) or switch the IEEE 1394 interface to an inactive state or power saving mode (ST30); and
in the second mode (mode 2) (YES in ST16), causing the self-device (10) to turn off a power supply of an internal device of the self-device (10) without turning off a power supply of the IEEE 1394 interface (14) (ST26).

12. A method according to claim 9, which can be used in a network (FIG. 1) including a self-device (10) having a function of receiving a predetermined control command (AV/C control command) and performing processing corresponding to the received control command, and having a first mode (mode 1) of giving a high priority to control on the self-device (10) and a second mode (mode 2) of accepting control from a remote device (20, 30), and at least one remote device (20, 30) which is connected to the self-device (10) and sends out at least one control command (excluding a command containing only a status), **characterized by** comprising:
registering a predetermined remote device (for example, 30) of the remote devices (20, 30) (ST10);
in the first mode (mode 1) (NO in ST16), causing the self-device (10) to reject a control command (AV/C control command) supplied from the remote device (20, 30);
in the second mode (mode 2) (YES in ST16), if the control command (AV/C control command) is not a command from the predetermined registered remote device (30) (NO in ST17), causing the self-device (10) to reject the control command (AV/C control command) supplied from the remote device (20) (ST22); and
in the second mode (mode 2) (YES in ST16), if the control command (AV/C control command) is a command from the predetermined registered remote device (30) (YES in ST17), causing the self-device (10) to perform processing corresponding to the supplied control command (AV/C control command) (ST18).

13. A method according to claim 9, which can be used in a network (FIG. 1) including a self-device (10) having a function of receiving a predetermined control command (AV/C control command) and performing processing corresponding to the received control command, and having a first mode (mode 1) of giving a high priority to control on the self-device (10) and a second mode (mode 2) of accepting control from a remote device (20, 30), and at least one remote device (20, 30) which is connected to the self-device (10) and sends out at least one control command (excluding a command containing only a status), **characterized by** comprising:
registering a predetermined remote device (for example, 30) of the remote devices (20, 30) (ST10);
in the first mode (mode 1) (NO in ST16), if the control command (AV/C control command) is not a command from the predetermined registered remote device (30) (NO in ST17), causing the self-device (10) to reject the control command (AV/C control command) supplied from the remote device (20) (ST22);
in the first mode (mode 1) (NO in ST16), if the control command (AV/C control command) is a command from the predetermined registered remote device (30) (YES in ST17), causing the self-device (10) to perform processing corresponding to the control command (AV/C control command) supplied from the remote device (30) (ST18); and
in the second mode (mode 2) (YES in ST16), causing the self-device (10) to perform processing corresponding to a supplied control command (AV/C control command) (ST18).

14. A memory (16) in which the method defined in any one of claims 9 to 13 is written as firmware.

15. A digital broadcast reception apparatus using the method defined in any one of claims 9 to 13.

16. A device control system used in a network (FIG. 1) including a self-device (10) having a function of receiving a predetermined control command (AV/C control command) and performing processing corresponding to the received control command and at least one remote device (20, 30) which is connected to the self-device (10) and sends out at least one control command (excluding a command containing only a status), and
using said apparatus defined in any one of claims 1 to 8 or the method defined in any one of claims 9 to 13.
